# EUROPÄISCHE PATENTSCHRIFT

(11) **EP 3 178 599 B1**
(45) Veröffentlichungstag und Bekanntmachung des Hinweises auf die Patenterteilung: **16.09.2020**
(21) Anmeldenummer: 16202184.4
(22) Anmeldetag: 05.12.2016
(51) Int. Cl.: B23K 20/10, B23K 20/26, B23K 37/02, B23Q 1/00

(54) **STÄNDERMASCHINE**
STAND MACHINE
MACHINE SUR COLONNE

(30) Priorität: 08.12.2015 DE 102015121354
(43) Veröffentlichungstag der Anmeldung: 14.06.2017
(73) Patentinhaber: MS Ultraschall Technologie GmbH, 78549 Spaichingen (DE)
(72) Erfinder: Krell, Volker, 78579 Neuhausen ob Eck (DE)
(74) Vertreter: Manitz Finsterwald Patent- und Rechtsanwaltspartnerschaft mbB

(56) Entgegenhaltungen:
- EP-A1- 1 235 266
- EP-A1- 2 905 108
- DE-A1- 3 411 933
- US-A1- 2014 367 018

## Beschreibung

Die vorliegende Erfindung betrifft eine Ständermaschine wie beispielsweise eine Säulen- oder Ständerbohrmaschine und insbesondere eine Ultraschallschweißmaschine gemäß dem Oberbegriff des Anspruchs 1, wie beispielsweise aus der EP 2 905 108 A1 bekannt.

Derartige Ständermaschinen können eine Grundplatte zur Aufnahme eines mittels der Werkzeugmaschine zu bearbeitenden Werkstücks umfassen, an der ein Ständer biegesteif angeschlossen ist, entlang dessen das Arbeitsorgan verschieblich geführt ist. Hierzu kann beispielsweise im Falle einer Ultraschallschweißmaschine ein entlang der Längsrichtung des Ständers verschieblich geführter Schlitten vorgesehen sein, der einen Schwingungsgenerator trägt, mittels dessen eine als Arbeitsorgan dienende Sonotrode zu hochfrequenten Schwingungen angeregt werden kann. Wird der Schlitten mittels des Linearantriebs in Längsrichtung verfahren, bis die Sonotrode mit dem zu schweißenden Werkstück in Anlage gelangt, kann mittels des Linearantriebs über die Sonotrode eine gewünschte Schweißkraft auf das Werkstück aufgebracht werden, die es je nach Anwendungsfall auf eine bestimmte Größe einzustellen gilt, wozu eine entsprechend ausgebildete Kraftregelung vorgesehen sein kann.

Wenn dabei das zu bearbeitende Werkstück jedoch verhältnismäßig starr oder unnachgiebig ist, kann es zu unerwünschten Überschwingungen in der Kraftregelung kommen, da in diesem Falle die Vorschubbewegung der Sonotrode bzw. die des Linearantriebs abrupt zum Erliegen kommt, wenn die Sonotrode mit dem Werkstück in Anlage gelangt. Somit kann zu diesem Zeitpunkt die über die Sonotrode auf das Werkstück aufgebrachte Kraft nicht hinreichend genau bestimmt werden.

Der Erfindung liegt daher die Aufgabe zugrunde, eine Ständermaschine anzugeben, über deren Arbeitsorgan eine Kraft vorbestimmter Größe auf ein zu bearbeitendes Werkstück möglichst exakt aufgebracht werden kann, selbst wenn das Werkstück verhältnismäßig starr oder unnachgiebig ist.

Diese Aufgabe wird mit einer Ständermaschine, insbesondere einer Ultraschallschweißmaschine, mit den Merkmalen des Anspruchs 1 und vor allem dadurch gelöst, dass sich der Schwingungsgenerator in der Flucht des Stellwegs des Linearantriebs befindet und dass im Kraftflusspfad zwischen dem Arbeitsorgan und dem Ständer ein elastisch verformbarer Körper in Form eines Festkörpergelenks vorgesehen ist, der bzw. das infolge einer Kraft, die mit Hilfe des Linearantriebs über das Arbeitsorgan auf ein auf einer Grundplatte positionierbares Werkstück aufbringbar ist, einer elastischen Verformung unterliegt.

Zum einen wird dadurch, dass sich der Schwingungsgenerator und damit auch das Arbeitsorgan in der Flucht des Stellwegs des Linearantriebs befindet, sichergestellt, dass es infolge einer Kraft, die mit Hilfe des Linearantriebs über das Arbeitsorgan auf ein auf einer Grundplatte positionierbares Werkstück aufgebracht wird, zu keinen unkontrollierten Biegeverformungen im Bereich des Linearantriebs und/oder des Schwingungsgenerators kommt, deren Größe nur schwer abzuschätzen ist. Andererseits wird durch das elastisch verformbare Festkörpergelenk bewusst zugelassen, dass der Linearantrieb im Rahmen bestimmter Grenzen seine Hubbewegung ab dem Zeitpunkt, zu dem das Arbeitsorgan mit dem Werkstück in Anlage gelangt, fortsetzen kann, um so aus der ab diesem Zeitpunkt auftretenden Hubbewegung die auf das Werkstück aufgebrachte Kraft zu Regelungszwecken bestimmen zu können.

Die Werkzeugmaschine und insbesondere die entlang des Ständers geführten Komponenten derselben unterliegen somit keinen unkontrollierbaren und unvorhersehbaren Verformungen, da aufgrund der Lage des Schwingungsgenerators in der Flucht des Stellwegs des Linearantriebs nur Verformungen des elastisch verformbaren Festkörpergelenks zugelassen werden, wenn mit Hilfe des Linearantriebs über das Arbeitsorgan eine Kraft auf das zu bearbeitende Werkstück aufgebracht wird. Da das elastisch verformbare Festkörpergelenk gezielt entworfen werden kann, um derartigen Verformungen zu erfahren, kann somit anhand der auf diese Weise erzwungenen Hubbewegung, die auf das Werkstück aufgebrachte Kraft genau bestimmt und geregelt werden.

Nachfolgend werden vorteilhafte Ausführungsformen der Erfindung beschrieben, wobei sich weitere Ausführungsformen auch aus den Unteransprüchen, der Figurenbeschreibung sowie den Zeichnungen ergeben.

Gemäß einer Ausführungsform kann es vorgesehen sein, dass sich das elastisch verformbare Festkörpergelenk im Kraftflusspfad zwischen dem Linearantrieb und dem Ständer befindet. Insbesondere kann das Festkörpergelenk an dem Ständer als Träger für den Linearantrieb angebracht sein, um den Linearantrieb einschließlich der durch diesen verfahrbaren Komponenten der Schweißmaschine, wie beispielsweise den Schlitten samt Schwingungsgenerator und Arbeitsorgan, zu tragen. Beispielsweise kann es sich bei dem elastisch verformbaren Festkörpergelenk um einen an dem Ständer angebrachten Kragträger handeln, an dessen freiem Ende der Linearantrieb angebracht ist.

Wird jedoch ein herkömmlicher Kragträger an seinem freien Ende ausgelenkt, so erfährt dasselbe gleichzeitig eine Verdrehung im Sinne der Balkenbiegetheorie. Da eine derartige Verdrehung jedoch nicht nur zu unerwünschten Zwängungen im Linearantrieb sondern auch zu unerwünschten Unparallelitäten zwischen der als Arbeitsorgan dienenden Sonotrode und dem Werkstück führen kann, kann es gemäß einer weiteren Ausführungsform vorgesehen sein, dass das Festkörpergelenk einen an dem Ständer angebrachten Befestigungsabschnitt und einen Tragabschnitt umfasst, an dem der Linearantrieb vorgesehen ist, wobei der Tragabschnitt derart elastisch mit dem Befestigungsabschnitt gekoppelt ist, dass der Tragabschnitt infolge einer Kraft, die mit Hilfe des Linearantriebs über ein Arbeitsorgan auf ein auf der Grundplatte positionierbares Werkstück aufbringbar ist, im Wesentlichen verdrehungsfrei in Längsrichtung des Ständers ausweicht. Beispielsweise kann der Befestigungsabschnitt mit dem Tragabschnitt über einen schubelastischen Vollkörper, eine oder mehrere vertikal stehende Lochplatten oder einen oder mehrere Rahmen verbunden sein, der bzw. die eine eingeleitete Querkraftbeanspruchung im Wesentlichen biegefrei abtragen, so dass es zu keiner Verdrehung des daran angebrachten Tragabschnitts kommt.

Anstelle den Befestigungsabschnitt mit dem Tragabschnitt über solch einen schubelastischen Vollkörper zu verbinden, kann das elastisch verformbare Festkörpergelenk gemäß einer anderen Ausführungsform beispielsweise durch einen in sich geschlossenen Rahmen gebildet sein. Beispielsweise kann das Festkörpergelenk gebildet werden, indem der an dem Ständer angebrachte Befestigungsabschnitt und der den Linearantrieb tragende Tragabschnitt über zumindest zwei in Längsrichtung des Ständers zueinander versetzte Biegebalken miteinander gekoppelt sind, die biegesteif an dem Befestigungsabschnitt und an dem Tragabschnitt angeschlossen und vorzugsweise einstückig bzw. materialeinheitlich mit diesem ausgeführt sind. Dadurch, dass zumindest zwei derartige Biegebalken vorgesehen sind, um den Tragabschnitt und den Befestigungsabschnitt miteinander zu koppeln, wird eine Scherung des elastisch verformbaren Festkörpergelenks unter Last erzwungen und somit eine Parallelführung gebildet, die keine Verdrehung bzw. Verkantung des Linearantriebs zulässt, wenn dieser in vertikaler Richtung infolge einer Kraftaufbringung auf das Werkstück ausgelenkt wird.

Gemäß einer weiteren Ausführungsform kann der Tragabschnitt zwei quer zur Ständerlängsrichtung zueinander versetzte Tragplatten umfassen, wobei jede Tragplatte über zumindest zwei in Längsrichtung des Ständers zueinander versetzte Biegebalken mit dem Befestigungsabschnitt gekoppelt ist, die biegesteif an dem Befestigungsabschnitt und der jeweiligen Tragplatte angeschlossen und vorzugsweise einstückig bzw. materialeinheitlich mit diesem ausgeführt sind. Dadurch, dass zwei quer zur Ständerlängsrichtung beabstandete Tragplatten vorgesehen sind - der Tragabschnitt also gewissermaßen in zwei Teile aufgelöst ist -, wird zwischen den beiden Tragplatten ein Raum zur Aufnahme des Linearantriebs geschaffen, und auch zwischen den quer zur Ständerlängsrichtung beabstandeten Biegebalken wird ein Raum geschaffen, in dem beispielsweise ein Servomotor angeordnet werden kann, durch den der Linearantrieb betätigt wird. Der Linearantrieb kann somit an beiden Tragplatten befestigt werden, so dass es zu keiner exzentrischen Beanspruchung des Linearantriebs kommt.

Da eine Hubbewegung von etwa 1 mm ab dem Zeitpunkt, zu dem das Arbeitsorgan mit dem zu bearbeitenden Werkstück in Anlage gelangt, ausreichend sein kann, um daraus die auf das Werkstück ausgeübte Kraft ableiten zu können, kann es gemäß einer weiteren Ausführungsform ein Anschlag vorgesehen sein, der die elastische Verformung des elastisch verformbaren Festkörpergelenks infolge einer Kraft, die mit Hilfe des Linearantriebs über ein Arbeitsorgan auf ein auf einer Grundplatte positionierbares Werkstück aufbringbar ist, auf einen Maximalwert von beispielweise etwa 1 mm oder weniger begrenzt. Durch einen derartigen Endanschlag kann insbesondere bei großen Kräften, die es auf das Werkstück aufzubringen gilt, bei einer eventuellen Fehlfunktion eine übermäßige starke Verformung des Festkörpergelenks verhindert werden, was andernfalls zu Lasten der Bearbeitungspräzision der Werkzeugmaschine ginge.

Gemäß einer Ausführungsform kann der Anschlag durch eine Anlagefläche an dem Tragabschnitt und eine stationäre Gegenfläche gebildet sein, an der die Anlagefläche bei einer elastischen Verformung des Festkörpergelenks anstößt. Beispielsweise kann der Anschlag an dem elastisch verformbaren Festkörpergelenk zwischen zwei in Längsrichtung des Ständers zueinander versetzten Biegebalken ausgebildet sein, und zwar beispielsweise in Form einer Stufe, einer Nut oder einer Kerbe, die mit einer Gegenstufe als Gegenanlagefläche in Anlage gelangen kann, die einstückig mit dem Befestigungsabschnitt ausgebildet ist.

Nachfolgend wird die Erfindung rein beispielhaft unter Bezugnahme auf die beigefügten Figuren erläutert. Es zeigen:

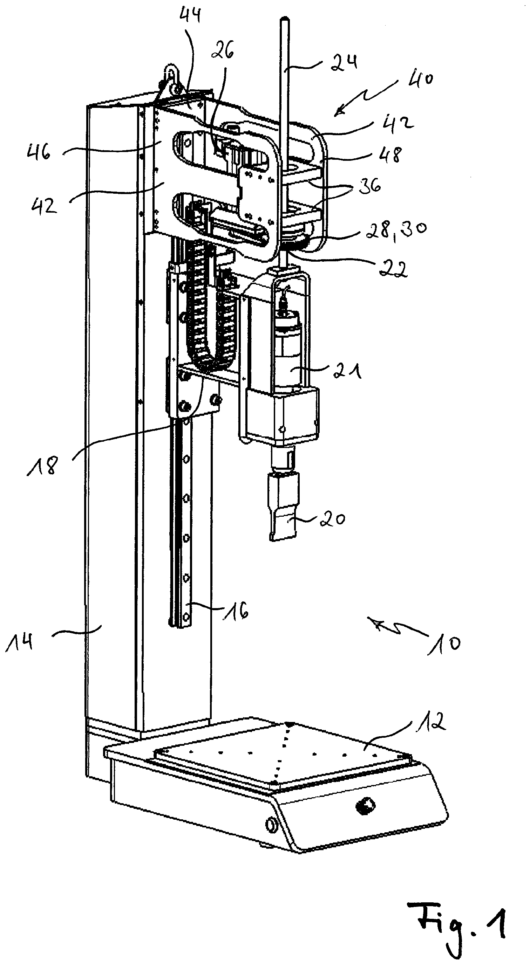

- Fig. 1: eine perspektivische Darstellung einer erfindungsgemäßen Ultraschallschweißmaschine; und
- Fig.2: eine vergrößerte Darstellung aus der Fig. 1 im Bereich des elastisch verformbaren Festkörpergelenks der Ultraschallschweißmaschine.

Die Ultraschallschweißmaschine 10 weist eine Grundplatte 12 auf, auf der ein zu schweißendes Werkstück (nicht dargestellt) angeordnet werden kann und die biegesteif mit einem aufrecht stehenden Ständer 14 verbunden ist. Entlang der Längsrichtung des Ständers 14 ist eine Führungsschiene 16 an dem Ständer 14 befestigt, entlang derer ein rahmenartiger Schlitten 18 verschieblich geführt ist, welcher einen Schwingungsgenerator 21 trägt, mit dem eine als Arbeitsorgan dienende Sonotrode 20 zu hochfrequenten Schwingungen angeregt werden kann.

Um den Schlitten 18 samt Schwingungsgenerator 21 und Sonotrode 20 durch die Führungsschiene 16 geführt entlang des Ständers 14 verfahren zu können, ist ein Linearantrieb 22 in Form eines Spindelantriebs vorgesehen, dessen Gewindespindel 24 derart an dem rahmenartigen Schlitten 14 aufrechtstehend angebracht ist, dass sich der Schwingungsgenerator 21 in der Flucht des Stellwegs des Linearantriebs 22, d.h. in der Spindelachse, befindet. Der Linearantrieb 22 und insbesondere dessen Spindelmutter 28 wird bei der hier dargestellten Ausführungsform in der erfindungsgemäßen Art und Weise an einem in seiner Gesamtheit mit dem Bezugszeichen 40 bezeichneten rahmenartigen elastisch verformbaren Festkörpergelenk aus Stahl getragen, das seinerseits am freien Ende des Ständers 14 frei auskragend angebracht ist.

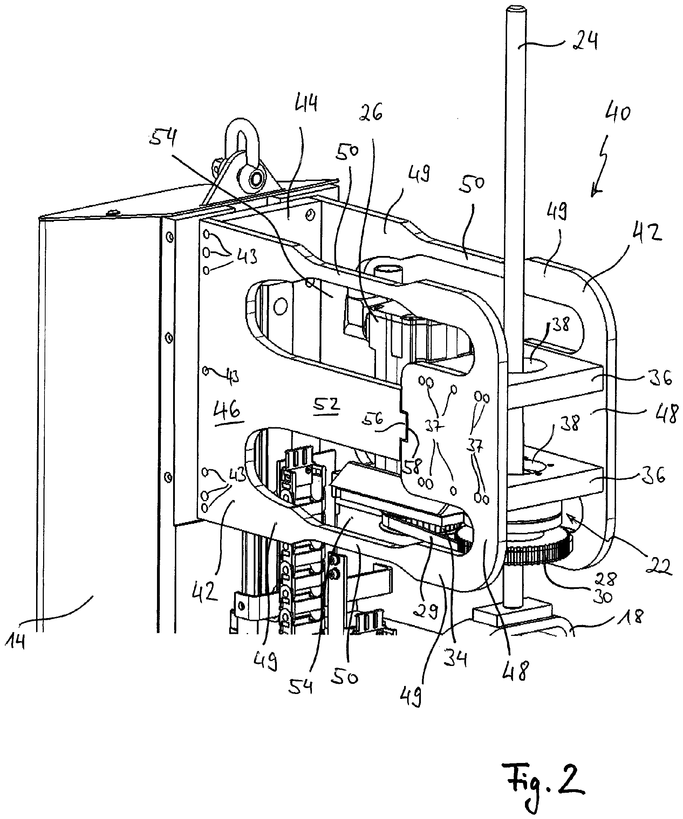

Wie die Fig. 2 zeigt, ist zur Betätigung des Linearantriebs 22 ein Servomotor 26 vorgesehen, dessen Abtriebszahnrad 34 über einen Rippenriemen 29 die Spindelmutter 28 antreibt, wozu diese entlang ihres Umfangs mit einer Außenverzahnung 30 versehen ist.

Wird die Spindelmutter 28 mittels des Servomotors 26 angetrieben, so wird hierdurch der Schlitten 18 einschließlich Schwingungsgenerator 21 und Sonotrode 20 abgesenkt, bis die Sonotrode 20 mit einem auf der Grundplatte 12 befindlichen Werkstück in Anlage gelangt, wodurch mit Hilfe des Linearantriebs 22 über die Sonotrode 20 in der gewünschten Weise eine Schweißkraft auf das auf der Grundplatte 12 befindliche Werkstück aufgebracht werden kann, was insbesondere dann, wenn das Werkstück verhältnismäßig starr oder unnachgiebig ist, dazu führt, dass das rahmenartige Festkörpergelenk 40 in der gewünschten Weise eine elastische Verformung erfährt.

Da sich erfindungsgemäß der Schwingungsgenerator 21 mitsamt seiner Sonotrode 20 in der Flucht des Stellwegs des Linearantriebs 22 befindet, treten außer dieser elastischen Verformung des elastisch verformbaren Festkörpergelenks 40 keine oder nur geringe Verformungen im Kraftflusspfad zwischen Sonotrode 20 und Ständer 14 auf. Da sich auch das Arbeitsorgan 20 in der Flucht des Stellwegs des Linearantriebs 22 befindet, wird sichergestellt, dass es infolge einer Kraft, die mit Hilfe des Linearantriebs 22 über das Arbeitsorgan 20 auf ein auf der Grundplatte 12 positionierbares Werkstück aufgebracht wird, zu keinen unkontrollierten Biegeverformungen im Bereich des Linearantriebs 22 und/oder des Schwingungsgenerators 21 kommt. Andererseits wird durch das Festkörpergelenk 40 bewusst zugelassen, dass der Linearantrieb 22 im Rahmen bestimmter Grenzen seine Hubbewegung ab dem Zeitpunkt, zu dem das Arbeitsorgan 20 mit dem Werkstück in Anlage gelangt, fortsetzen kann, um so aus der ab diesem Zeitpunkt auftretenden Hubbewegung die auf das Werkstück aufgebrachte Kraft einregeln zu können, ohne dass es zu Überschwingungen kommt.

Nachfolgend wird eine beispielhafte Ausführungsform eines elastisch verformbaren Festkörpergelenks 40 unter Bezugnahme auf die Fig. 2 im Detail beschrieben.

Wie Fig. 2 zeigt, besteht das elastisch verformbare Festkörpergelenk 40 im Wesentlichen aus zwei parallel zueinander beabstandeten rahmenartigen Platten 42, die mittels geeigneter Befestigungsmittel 43 an einer plan am freien Ende des Ständers 14 angebrachten Platte 44 befestigt sind. An dem vom Ständer 14 abgewandten Ende sind die beiden Platten 42 über zwei vertikal voneinander beabstandete Verbindungsplatten 36 mit Hilfe geeigneter Befestigungsmittel 37 miteinander verbunden, die jeweils eine Öffnung 38 aufweisen, durch die sich die Spindel 24 des Linearantriebs 22 hindurch erstreckt. An der unteren der beiden Verbindungsplatten 36 ist die Spindelmutter 28 des Linearantriebs 23 drehbar hängend gelagert, so dass über die untere der beiden Platten 42 des Festkörpergelenks 40 sowohl die Gewichtskraft des Linearantriebs 22 und des daran angehängten Schwingungsgenerators 21 als auch die mittels des Linearantriebs 22 auf ein zu bearbeitendes Werkzeug aufbringbare Schweißkraft auf den Ständer 14 übertragen werden kann.

Die beiden Platten 42 werden durch die an dem Ständer 14 angebrachte Platte 44 und die beiden Verbindungsplatten 36 auf Abstand gehalten, wodurch zwischen den beiden Platten 42 ein Raum zur Aufnahme des Linearantriebs 22 geschaffen ist, der auch zur Aufnahme des Servomotors 26 dient, durch den der Linearantrieb 22 angetrieben wird.

Jede der beiden Platten 42 des Festkörpergelenks 40 weist eine im Wesentlichen rahmenartige Gestalt auf. Diese Rahmengestalt ist im Wesentlichen dadurch bedingt, dass jede Platte 42 über einen an dem Ständer 14 bzw. an der daran angebrachten Platte 44 angebrachten Befestigungsabschnitt 46 und einen Tragabschnitt 48 verfügt, an dem der Linearantrieb 22 über die untere Verbindungsplatte 36 angebracht ist, wobei der Befestigungsabschnitt 46 und der Tragabschnitt 48 über zwei in Längsrichtung des Ständers 14 zueinander versetzte Biegebalken 50 miteinander gekoppelt sind, wodurch die beiden Platten 42 eine rahmenartig umlaufende geschlossene Gestalt aufweisen.

Da das elastisch verformbare Festkörpergelenk 40 bei der hier dargestellten Ausführungsform unter anderem durch die beiden rahmenartigen Platten 42 gebildet wird, können die Tragabschnitte 48 der beiden Platten 42 auch als Tragplatten und die Befestigungsabschnitte 46 als Befestigungsplatten bezeichnet werden. Die Biegebalken 50 sind in der dargestellten Ausführungsform biegesteif an dem Befestigungsabschnitt 46 und an dem Tragabschnitt 48 über Armabschnitte 49 mit im Vergleich zu den Biegebalken 50 größerem Querschnitt angeschlossen, wobei die Armabschnitte 49 wie die Biegebalken 50 aus demselben Plattenmaterial wie der Befestigungsabschnitt 46 und der Tragabschnitt 48 gefertigt sind. Beispielsweise kann die rahmenartige Gestalt der Platten 42 dadurch erzeugt werden, dass in einer im Wesentlichen rechteckförmigen Platte eine oder mehrere Durchgangsöffnungen 54 erzeugt werden, die unter anderem durch die Biegebalken 50, den Befestigungsabschnitt 46 sowie den Tragabschnitt 48 begrenzt bzw. berandet sind. Auf diese Weise wird durch die beiden rahmenartigen Platten 42 des Festkörpergelenks 40 unter Last eine Scherung des Festkörpergelenks 40 erzwungen und somit eine Parallelführung gebildet, die ausschließlich eine vertikale Verformung zulässt, wenn über den Linearantrieb 22 eine Kraft auf ein Werkstück aufgebracht wird. Demgegenüber wird ein Verdrehen bzw. Verkanten des Linearantriebs 22 und damit auch des Arbeitsorgans 20 verhindert, da durch die beiden parallel geschalteten Biegebalken 15 eine Parallelverschiebung des Tragabschnitts 48 und damit des Linearantriebs 22 erzwungen wird. Es handelt sich bei dem Festkörpergelenk also insofern um ein Gelenk, als dass es wie ein Schubgelenk eine Relativbewegung zweier Körper, die durch das Festkörpergelenk miteinander gekoppelt sind, ermöglicht.

Um eine übermäßige Verformung der beiden Platten 42 und insbesondere der Biegebalken 50 zu verhindern, erstreckt sich ausgehend von dem Befestigungsabschnitt 46 der beiden Platten 42 jeweils ein frei auskragender Riegel 52, der die beiden Durchgangsöffnungen 54 voneinander trennt und an dessen freien Ende ein Zapfen 56 ausgebildet ist, der in eine dazu korrespondierende Ausnehmung 58 am Rand des Tragabschnitts 48 eingreift, wobei jedoch in vertikaler Richtung zwischen der Ausnehmung 58 und dem Zapfen 56 ein Spiel von einigen mm, beispielsweise etwa 1 mm existiert, um so die gewünschte elastische Verformung des Festkörpergelenks 40 zu ermöglichen, jedoch eine plastische Verformung desselben zu verhindern. Das elastisch verformbare Festkörpergelenk 40 verfügt somit über einen Anschlag, der durch eine Anlagefläche in Form der Ausnehmung 58 an dem Tragabschnitt 48 und eine Gegenanlagefläche in Form des Zapfens 56 gebildet wird, da die Anlagefläche der Ausnehmung 58 an der korrespondierenden Gegenanlagefläche des Zapfens 56 anstößt, wenn die auf das zu bearbeitende Werkstück aufgebrachte Kraft einen bestimmten Wert überschreitet.

Falls kein Anschlag benötigt wird oder anderweitig für einen Anschlag gesorgt wird, kann der Riegel 52 entfallen, wodurch die rahmenartige Gestalt der beiden Platten 42 deutlicher in Erscheinung tritt. In diesem Falle kann die rahmenartige Gestalt der Platten 42 dadurch erzeugt werden, dass in einer im Wesentlichen rechteckförmige Platte eine einzige Durchgangsöffnungen 54 erzeugt wird, die dann durch die Biegebalken 50, den Befestigungsabschnitt 46 sowie den Tragabschnitt 48 begrenzt bzw. berandet ist.

### Bezugszeichenliste

- 10: Ultraschallschweißmaschine
- 12: Grundplatte
- 14: Ständer
- 16: Führungsschiene
- 18: rahmenartiger Schlitten
- 20: Arbeitsorgan/Sonotrode
- 21: Schwingungsgenerator
- 22: Linearantrieb
- 24: Spindel
- 26: Servomotor
- 28: Spindelmutter
- 29: Rippenriemen
- 30: Außenverzahnung
- 34: Abtriebszahnrad
- 36: Verbindungsplatten
- 37: Befestigungsmittel
- 38: Öffnung
- 40: elastisch verformbares Festkörpergelenk
- 42: Platten
- 43: Befestigungsmittel
- 44: Platte
- 46: Befestigungsabschnitt
- 48: Tragabschnitt
- 49: Armabschnitte
- 50: Biegebalken
- 52: Riegel
- 54: Durchgangsöffnung
- 56: Zapfen
- 58: Ausnehmung

## Patentansprüche

1. Ständermaschine (10), insbesondere Ultraschallschweißmaschine, umfassend:
- einen Ständer (14), der an einer Grundplatte (12) anbringbar ist, auf der ein von der Ständermaschine zu bearbeitendes Werkstück positionierbar ist;
- einen Schwingungsgenerator (21), mittels dessen ein Arbeitsorgan (20) antreibbar ist;
- einen Schlitten (18), der den Schwingungsgenerator (21) trägt und der in Längsrichtung des Ständers (14) verschieblich geführt ist; und
- einen Linearantrieb (22), der den Schlitten (18) trägt und der an dem Ständer (14) angebracht ist;
wobei sich der Schwingungsgenerator (21) in der Flucht des Stellwegs des Linearantriebs (22) befindet;
**dadurch gekennzeichnet, dass**
im Kraftflusspfad zwischen einem Arbeitsorgan (20) und dem Ständer (14) ein elastisch verformbares Festkörpergelenk (40) vorgesehen ist, das infolge einer Kraft, die mit Hilfe des Linearantriebs (22) über das Arbeitsorgan (20) auf das Werkstück aufbringbar ist, einer elastischen Verformung unterliegt.

2. Ständermaschine nach Anspruch 1,
**dadurch gekennzeichnet, dass**
das Festkörpergelenk (40) als eine Parallelführung ausgebildet ist.

3. Ständermaschine nach Anspruch 1 oder 2,
**dadurch gekennzeichnet, dass**
sich das elastisch verformbare Festkörpergelenk (40) im Kraftflusspfad zwischen dem Linearantrieb (22) und dem Ständer (14) befindet.

4. Ständermaschine nach Anspruch 1, 2 und/oder 3,
**dadurch gekennzeichnet, dass**
das Festkörpergelenk (40) an dem Ständer (14) angebracht ist und den Linearantrieb (22) trägt.

5. Ständermaschine nach einem der vorstehenden Ansprüche,
**dadurch gekennzeichnet, dass**
das Festkörpergelenk (40) einen Befestigungsabschnitt (46), der an dem Ständer (14) angebracht ist, und einen Tragabschnitt (48) umfasst, an dem der Linearantrieb (22) angebracht ist, wobei der Tragabschnitt (48) derart elastisch mit dem Befestigungsabschnitt (46) gekoppelt ist, dass der Tragabschnitt (48) infolge einer Kraft, die mit Hilfe des Linearantriebs (22) über das Arbeitsorgan (20) auf ein Werkstück aufbringbar ist, verdrehungsfrei in Längsrichtung des Ständers (14) ausweicht.

6. Ständermaschine nach einem der vorstehenden Ansprüche,
**dadurch gekennzeichnet, dass**
das Festkörpergelenk (40) einen Befestigungsabschnitt (46), der an dem Ständer angebracht ist, und einen Tragabschnitt (48) umfasst, an dem der Linearantrieb (22) angebracht ist, wobei der Befestigungsabschnitt (46) und der Tragabschnitt (48) über zumindest zwei in Längsrichtung des Ständers (14) zueinander versetzte Biegebalken (50) miteinander gekoppelt sind, die biegesteif an dem Befestigungsabschnitt (46) und an dem Tragabschnitt (48) angeschlossen und vorzugsweise einstückig mit diesen ausgeführt sind.

7. Ständermaschine nach Anspruch 5 und/oder 6,
**dadurch gekennzeichnet, dass**
der Tragabschnitt (48) zwei quer zur Ständerlängsrichtung zueinander versetzte Tragplatten umfasst, wobei jede Tragplatte über zumindest zwei in Längsrichtung des Ständers (14) zueinander versetzte Biegebalken (50) mit dem Befestigungsabschnitt (46) gekoppelt ist, die biegesteif an dem Befestigungsabschnitt (46) und der jeweiligen Tragplatte angeschlossen und vorzugsweise einstückig mit diesen ausgeführt sind.

8. Ständermaschine nach einem der vorstehenden Ansprüche,
**dadurch gekennzeichnet, dass**
ein Anschlag vorgesehen ist, der die elastische Verformung des Festkörpergelenks (40) infolge einer Kraft, die mit Hilfe des Linearantriebs (22) über das Arbeitsorgan (22) auf ein Werkstück aufbringbar ist, auf einen Maximalwert von insbesondere etwa 1 mm begrenzt.

9. Ständermaschine nach Anspruch 8,
**dadurch gekennzeichnet, dass**
der Anschlag durch eine Anlagefläche an dem Tragabschnitt (48) und eine stationäre Gegenanlagefläche gebildet wird, an der die Anlagefläche infolge einer elastischen Verformung des Festkörpergelenks (40) anstößt.

10. Ständermaschine nach Anspruch 6, 7, 8 und/oder 9,
**dadurch gekennzeichnet, dass**
der Anschlag an dem Festkörpergelenk (40) zwischen zwei in Längsrichtung des Ständers zueinander versetzten Biegebalken ausgebildet ist.

## Claims

1. A stand machine (10), in particular an ultrasonic welding machine, comprising:
- a stand (14) which can be attached to a base plate (12) on which a workpiece to be machined by the stand machine can be positioned;
- a vibration generator (21) by means of which a working member (20) can be driven;
- a slide (18) which bears the vibration generator (21) and which is displaceably guided in the longitudinal direction of the stand (14); and
- a linear drive (22) which bears the slide (18) and which is attached to the stand (14),
wherein the vibration generator (21) is located in the alignment of the actuation path of the linear drive (22),
**characterized in that**
an elastically deformable solid state hinge (40) is provided in the force flow path between a working member (20) and the stand (14), said elastically deformable solid state hinge (40) being subject to an elastic deformation as a result of a force which can be applied to the workpiece via the working member (20) with the aid of the linear drive (22).

2. A stand machine in accordance with claim 1,
**characterized in that**
the solid state hinge (40) is configured as a parallel guide.

3. A stand machine in accordance with claim 1 or claim 2,
**characterized in that**
the elastically deformable solid state hinge (40) is located in the force flow path between the linear drive (22) and the stand (14).

4. A stand machine in accordance with claim 1, claim 2 and/or claim 3,
**characterized in that**
the solid state hinge (40) is attached to the stand (14) and supports the linear drive (22).

5. A stand machine in accordance with any one of the preceding claims,
**characterized in that**
the solid state hinge (40) comprises a fastening section (46) which is attached to the stand (14); and a support section (48) to which the linear drive (22) is attached, with the support section (48) being elastically coupled to the fastening section (46) such that the support section (48) yields in a twist-free manner in the longitudinal direction of the stand (14) as a result of a force which can be applied to a workpiece via the working member (20) with the aid of the linear drive (22).

6. A stand machine in accordance with any one of the preceding claims,
**characterized in that**
the solid state hinge (40) comprises a fastening section (46) which is attached to the stand; and a support section (48) to which the linear drive (22) is attached, with the fastening section (46) and the support section (48) being coupled to one another via at least two bending beams (50) which are offset from one another in the longitudinal direction of the stand (14), which are flexurally rigidly connected to the fastening section (46) and to the support section (48) and which are preferably designed in one piece with them.

7. A stand machine in accordance with claim 5 and/or claim 6,
**characterized in that**
the support section (48) comprises two support plates which are offset from one another transversely to the longitudinal direction of the stand, with each support plate being coupled to the fastening section (46) via at least two bending beams (50) which are offset from one another in the longitudinal direction of the stand (14), which are flexurally rigidly connected to the fastening section (46) and to the respective support plate and which are preferably designed in one piece with them.

8. A stand machine in accordance with any one of the preceding claims,
**characterized in that**
an abutment is provided which limits the elastic deformation of the solid state hinge (40) to a maximum value of in particular approximately 1 mm as a result of a force which can be applied to a workpiece via the working member (22) by means of the linear drive (22).

9. A stand machine in accordance with claim 8,
**characterized in that**
the abutment is formed by a contact surface at the support section (48) and by a stationary mating contact surface which the contact surface abuts as a result of an elastic deformation of the solid state hinge (40).

10. A stand machine in accordance with claim 6, claim 7, claim 8 and/or claim 9,
**characterized in that**
the abutment at the solid state hinge (40) is formed between two bending beams offset from one another in the longitudinal direction of the stand.

## Revendications

1. Machine à montant (10), en particulier machine à souder par ultrasons, comprenant :
- un montant (14) qui peut être monté sur une plaque de base (12) sur laquelle peut être positionnée une pièce à œuvrer par la machine à montant ;
- un générateur de vibrations (21) permettant d'entraîner un organe de travail (20) ;
- un chariot (18) qui porte le générateur de vibrations (18) et qui est guidé de manière à pouvoir se déplacer dans la direction longitudinale du montant (14) ; et
- un entraînement linéaire (22) qui supporte le chariot (18) et qui est monté sur le montant (14) ;
le générateur de vibrations (21) étant aligné avec le chemin de déplacement de l'entraînement linéaire (22) ;
**caractérisée en ce que**
une articulation à corps solide (40) élastiquement déformable est prévue dans le trajet du flux de force entre un organe de travail (20) et le montant (14), qui est soumise à une déformation élastique sous l'effet d'une force qui peut être appliquée à la pièce à œuvrer par l'intermédiaire de l'organe de travail (20) à l'aide de l'entraînement linéaire (22).

2. Machine à montant selon la revendication 1,
**caractérisée en ce que**
l'articulation à corps solide (40) est réalisée sous la forme d'un guidage parallèle.

3. Machine à montant selon la revendication 1 ou 2,
**caractérisée en ce que**
l'articulation à corps solide (40) élastiquement déformable est située dans le trajet du flux de force entre l'entraînement linéaire (22) et le montant (14).

4. Machine à montant selon la revendication 1, 2 et/ou 3,
**caractérisée en ce que**
l'articulation à corps solide (40) est montée sur le montant (14) et supporte l'entraînement linéaire (22).

5. Machine à montant selon l'une des revendications précédentes,
**caractérisée en ce que**
l'articulation à corps solide (40) comprend une portion de fixation (46) montée sur le montant (14) et une portion de support (48) sur laquelle est monté l'entraînement linéaire (22), la portion de support (48) étant couplée élastiquement à la portion de fixation (46) de telle manière que la portion de support (48) cède sans torsion dans la direction longitudinale du montant (14) sous l'effet d'une force qui peut être appliquée à une pièce à œuvrer par l'intermédiaire de l'organe de travail (20) à l'aide de l'entraînement linéaire (22).

6. Machine à montant selon l'une des revendications précédentes,
**caractérisée en ce que**
l'articulation à corps solide (40) comprend une portion de fixation (46) montée sur le montant et une portion de support (48) sur laquelle est monté l'entraînement linéaire (22), la portion de fixation (46) et la portion de support (48) étant couplées entre elles par au moins deux poutres de flexion (50) décalées l'une par rapport à l'autre dans la direction longitudinale du montant (14), qui sont reliées de manière rigide en flexion à la portion de fixation (46) et à la portion de support (48) et qui sont de préférence réalisées d'un seul tenant avec celles-ci.

7. Machine à montant selon la revendication 5 et/ou 6,
**caractérisée en ce que**
la portion de support (48) comprend deux plaques de support décalées l'une par rapport à l'autre transversalement à la direction longitudinale du montant, chaque plaque de support étant couplée à la portion de fixation (46) par l'intermédiaire d'au moins deux poutres de flexion (50) décalées l'une par rapport à l'autre dans la direction longitudinale du montant (14), qui sont reliées de manière rigide en flexion à la portion de fixation (46) et à la plaque de support respective et qui sont de préférence réalisées d'un seul tenant avec celles-ci.

8. Machine à montant selon l'une des revendications précédentes,
**caractérisée en ce que**
il est prévu une butée qui limite à une valeur maximale, en particulier d'environ 1 mm, la déformation élastique de l'articulation à corps solide (40) sous l'effet d'une force qui peut être appliquée sur une pièce à œuvrer par l'intermédiaire de l'organe de travail (22) à l'aide de l'entraînement linéaire (22).

9. Machine à montant selon la revendication 8,
**caractérisée en ce que**
la butée est formée par une surface d'appui sur la portion de support (48) et par une surface d'appui complémentaire stationnaire contre laquelle la surface d'appui vient en butée sous l'effet d'une déformation élastique de l'articulation à corps solide (40).

10. Machine à montant selon la revendication 6, 7, 8 et/ou 9,
**caractérisée en ce que**
la butée sur l'articulation à corps solide (40) est formée entre deux poutres de flexion qui sont décalées l'une par rapport à l'autre dans la direction longitudinale du montant.
